# EUROPÄISCHE PATENTSCHRIFT

(11) **EP 2 196 005 B1**
(45) Veröffentlichungstag und Bekanntmachung des Hinweises auf die Patenterteilung: **25.02.2015**
(21) Anmeldenummer: 08801643.1
(22) Anmeldetag: 20.08.2008
(51) Int. Cl.: H04L 29/08

(54) **DATENKOMMUNIKATIONSVERFAHREN UND DATENTRÄGER DAFÜR**
DATA COMMUNICATION METHOD AND DATA CARRIER THEREFOR
PROCÉDÉ DE COMMUNICATION DE DONNÉES ET SUPPORT DE DONNÉES CORRESPONDANT

(30) Priorität: 29.08.2007 DE 102007040872
(43) Veröffentlichungstag der Anmeldung: 16.06.2010
(73) Patentinhaber: Giesecke&Devrient, 81677 München (DE)
(72) Erfinder: SPITZ, Stephan, 81247 München (DE); EICHHOLZ, Jan, 80997 München (DE)
(86) Internationale Anmeldenummer: PCT/EP2008/006863
(87) Internationale Veröffentlichungsnummer: WO 2009/030375

(56) Entgegenhaltungen:
- DE-A1-102005 032 310
- REES J ET AL: "WEBCARD: A JAVA CARD WEB SERVER" SMART CARD RESEARCH AND ADVANCED APPLICATIONS. IFIP WORKINGCONFERENCE ON SMART CARD RESEARCH AND ADVANCED APPLICATIONS, XX, XX, 20. September 2000 (2000-09-20), Seiten 197-207, XP001013569
- TUAL J P ET AL: "USB full speed enabled smart cards for consumer electronics applications" CONSUMER ELECTRONICS, 2005. (ISCE 2005). PROCEEDINGS OF THE NINTH INTE RNATIONAL SYMPOSIUM ON MACAU SAR 14-16 JUNE 2005, PISCATAWAY, NJ, USA,IEEE, 14. Juni 2005 (2005-06-14), Seiten 230-236, XP010832150 ISBN: 978-0-7803-8920-5

## Beschreibung

Die vorliegende Erfindung betrifft ein Verfahren zur Datenkommunikation zwischen einem portablen Datenträger und einem externen Kommunikationsgerät sowie einen entsprechend eingerichteten Datenträger. Insbesondere betrifft die Erfindung die Datenkommunikation mit einer Chipkarte, welche sowohl APDUs gemäß ISO/ IEC 7816-4 als auch Internetprotokoll-Kommandos verarbeitet und über einen TCP/IP-Protokollstapel verfügt.

Die Datenkommunikation zwischen einem Lesegerät und einer Chipkartenapplikation auf einer Chipkarte findet unter Verwendung von so genannten APDUs ("Application Protocol Data Unit") gemäß ISO/IEC 7816-4 statt. Eine APDU ist eine genormte Dateneinheit für ein Anwendungsprotokoll-Kommando. Sie kann der Anwendungsschicht des OSI-Referenzmodells zugeordnet werden.

Das OSI-Referenzmodell ("Open Systems Interconnection Reference Model") ist ein Schichtenmodell der Internationalen Organisation für Normung (ISO, "International Standardization Organization"). Es wurde als allgemeine Designgrundlage für Kommunikationsprotokolle zur Datenkommunikation über ein beliebiges Netzwerk und zwischen beliebigen Systemen entwickelt. Die abstrakten Aufgaben der Datenkommunikation werden dazu funktional in sieben Schichten unterteilt. Für jede Schicht gibt es eine Beschreibung der Aufgaben der Schicht. Ein Kommunikationsprotokoll hat jeweils nur die Aufgaben einer Schicht zu erfüllen. Es gibt dabei keine spezifischen Vorgaben zur Lösung der entsprechenden Aufgabe.

Nach dem Grundgedanken des OSI-Referenzmodells wird eine Datenkommunikation zwischen zwei Systemen derart durchgeführt, dass ein Kommunikationsprotokoll einer Schicht die Dienste von Kommunikationsprotokollen der direkt darunter liegenden Schicht benutzt und seinerseits seine Dienste den Kommunikationsprotokollen der nächst höheren Schicht bereitstellt. Dies erlaubt es einer Schicht, von den Details zu abstrahieren, die von den darunter liegenden Schichten bearbeitet werden.

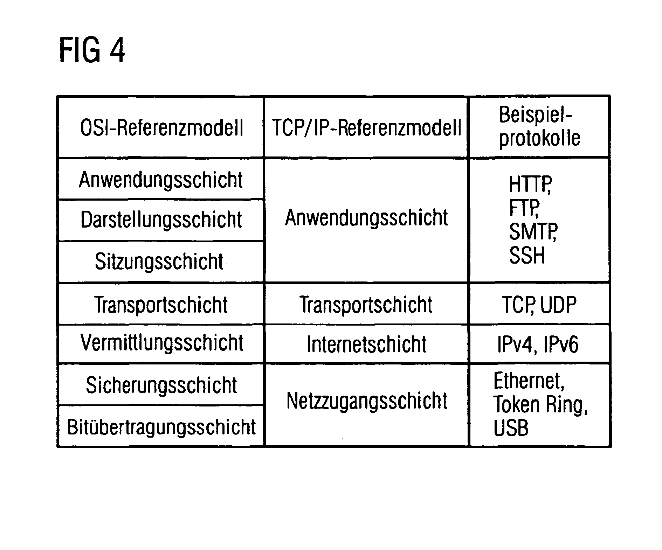

Die sieben Schichten des OSI-Referenzmodells werden im Folgenden mit Bezug auf Fig. 4 kurz skizziert.

Die Anwendungsschicht ist die oberste der sieben Schichten. Applikationen eines Systems werden als oberhalb der Anwendungsschicht liegend betrachtet. Die Anwendungsschicht selbst beinhaltet Kommunikationsprotokolle, die den Applikationen auf dem System eine Vielzahl von Funktionalitäten bereitstellen, beispielsweise für die Datenübertragung zu anderen Systemen, für den e-Mail-Verkehr und dergleichen. Kommunikationsprotokolle der Anwendungsschicht sind z.B. HTTP, FTP, SSH und SMTP. Wie bereits erwähnt sind auch APDUs Kommandos, die in diese Schicht fallen.

Die Darstellungsschicht liegt unterhalb der Anwendungsschicht und beinhaltet Protokolle, die eine systemabhängige Darstellung von Daten in eine systemunabhängige Form umsetzten. Auf diese Weise wird der syntaktisch korrekte Datenaustausch zwischen verschiedenen Systemen sichergestellt.

Die Sitzungsschicht liegt unter der Darstellungsschicht und sorgt für die Prozesskommunikation zwischen zwei Systemen. In dieser Schicht werden Dienste zum organisierten und synchronisierten Datenaustausch bereitgestellt, die es beispielsweise ermöglichen, Zusammenbrüche einer Datenkommunikationssitzung und ähnliche Probleme zu lösen.

Diese drei oberen Schichten stellen somit anwendungsorientierte Dienste bereit, die den Applikationen eines Systems die Datenkommunikation mit Applikationen eines anderen Systems ermöglichen. Die folgenden vier unteren Schichten des OSI-Referenzmodells sind dagegen transportorientiert. Sie stellen Dienste bereit, die die Herstellung einer Datenkommunikationsverbindung zwischen den zwei Systemen und die Datenübertragung zwischen den Systemen ermöglichen.

Zu den Aufgaben der Transportschicht zählen die Segmentierung und die Stauvermeidung bei der Datenübertragung. Sie ist die unterste Schicht im OSI-Referenzmodell, die eine vollständige Ende-zu-Ende Kommunikation zwischen Sender und Empfänger einer Datenübertragung zur Verfügung stellt. Den darüber liegenden Schichten werden dadurch Dienste zur Datenkommunikation bereitgestellt, die die Eigenschaften des aktuellen Kommunikationsnetzes verbergen. Zur Transportschicht zählen z.B. Kommunikationsprotokolle wie TCP ("Transmission Control Protocol") und UDP ("User Datagram Protocol").

Die Kommunikationsprotokolle der unter der Transportschicht liegenden Vermittlungsschicht beinhalteten Dienste für das Schalten von Verbindungen und die Weitervermittlung von Datenpaketen von einem Rechner zum nächsten entlang eines Pfades vom Sender zum Empfänger (Punkt-zu-Punkt Verbindung). Auch das Routing, also die Wegesuche für zu sendende Datenpakete von einem Rechner zum nächsten obliegt der Vermittlungsschicht. Wichtige Protokolle dieser Schicht sind die verschiedenen Versionen des IPs ("Internet Protocol"), IPv4, IPv6.

Aufgabe der unter der Vermittlungsschicht liegenden Sicherungsschicht ist es, eine weitgehend fehlerfreie Datenüberragung zu gewährleisten und Zugriff auf das Übertragungsmedium zu regeln. Dazu dient z.B. das Einteilen eines zu übertragenden Bitstroms in Blöcke, das Hinzufügen von Prüfsummen und dergleichen. Quittungsmechanismen lassen z.B. ein Verlorengehen von Datenblöcken erkennen und ermöglichen ein erneutes Senden derselben.

Die Bitübertragungsschicht als unterste Schicht des OSI-Referenzmodells stellt mechanische, elektrische und weitere funktionale Hilfsmittel zur Verfügung, um physikalische Verbindungen zu aktivieren und zu deaktivieren und Bits als Informationseinheiten zu übertragen.

Ähnlich wie zur Strukturierung allgemeiner Netzwerkkommunikationsprotokolle das OSI-Referenzmodell geschaffen wurde, existiert zur Strukturierung der speziellen in der Internetprotokollfamilie verwendeten Kommunikationsprotokolle das TCP/IP-Referenzmodell. Ungefähr 500 Kommunikationsprotokolle, die eine Basis zur Datenkommunikation im Internet bilden, werden in der Internetprotokollfamilie zusammengefasst. Häufig, wie auch im Zusammenhang mit der vorliegenden Erfindung, wird die Internetprotokollfamilie als TCP/IP-Protokollfamilie bezeichnet.

Das TCP/ IP-Referenzmodell ist wie das OSI-Referenzmodell hierarchisch aufgebaut. Es stellt in etwa ein Äquivalent zum OSI-Referenzmodell für die eingeschränkte Menge der Kommunikationsprotokolle der TCP/ IP-Protokollfamilie dar und besitzt nur vier Schichten, die in Fig. 4 den in etwa entsprechenden Schichten des OSI-Referenzmodells gegenübergestellt sind. Die Aufgaben der Protokolle in den jeweiligen Schichten des TCP/IP-Referenzmodells entsprechen den vorstehend beschriebenen Aufgaben der entsprechend gegenübergestellten Schichten des OSI-Referenzmodells.

Die Anwendungsschicht als oberste Schicht des TCP/IP-Referenzmodells entspricht dabei näherungsweise den drei oberen Schichten des OSI-Referenzmodells. Die darunter liegende Transportschicht des TCP/IP-Referenzmodells entspricht der Transportschicht des OSI-Referenzmodells. Genauso entspricht die wiederum darunter liegende Internetschicht des TCP/IP-Referenzmodells der Vermittlungsschicht des OSI-Referenzmodells. Die zuunterst liegende Netzzugangsschicht des TCP/IP-Referenzmodells umfasst die Sicherungsschicht und die Bitübertragungsschicht des OSI-Referenzmodells.

Das TCP/IP-Referenzmodell gliedert somit gröber als das OSI-Referenzmodell. Die Beschreibung der Aufgaben eines Kommunikationsprotokolls einer Schicht im TCP/IP-Referenzmodell ist dabei nicht so genau festgelegt wie im OSI-Referenzmodell. Die Netzzugangsschicht ist im TCP/IP-Referenzmodell spezifiziert, enthält aber nach gängiger Lesart keine Protokolle der TCP/IP-Protokollfamilie. Sie ist vielmehr als Platzhalter für verschiedene Datenübertragungstechniken vorgesehen, die die Aufgaben erfüllen, die mit Bezug auf die Sicherungsschicht und die Bitübertragungsschicht des OSI-Referenzmodells vorstehend beschrieben worden sind. Es gibt auch Kommunikationsprotokolle der TCP/IP-Protokollfamilie, die sich nicht eindeutig einer Schicht zuordnen lassen, da sie Teilaufgaben mehrerer Schichten gleichzeitig lösen. Im Rahmen des TCP/IP-Referenzmodells ist es gestattet, dass ein Protokoll einer Schicht Dienste von Protokollen aller darunter liegender Schichten in Anspruch nimmt.

Im TCP/ IP-Referenzmodell bezeichnet ein TCP/IP-Protokollstapel eine Menge von Kommunikationsprotokollen aus der TCP/IP-Protokollfamilie zusammen mit einem geeigneten Protokoll aus der Netzzugangsschicht, wobei der Protokollstapel aus jeder Schicht des TCP/IP Referenzmodells zumindest ein geeignetes Protokoll umfasst. Demnach ist eine Datenkommunikation zwischen zwei Systemen über das Internet möglich, wenn jedes der beiden Systeme über einen TCP/IP-Protokollstapel verfügt und eine Anbindung an das Internet physikalisch hergestellt werden kann. In der Regel ist die Software, die die entsprechenden Kommunikationsprotokolle eines TCP/IP-Protokollstapels auf einem System zur Verfügung stellt, Teil des Betriebssystems des entsprechenden Systems.

Es sind Chipkarten mit Internetfunktionalität bekannt, die einen TCP/IP-Protokollstapel umfassen. Damit ist es möglich, von einem Rechner im Internet unter Benutzung von Kommunikationsprotokollen aus der TCP/ IP-Protokollfamilie direkt auf internetspezifische Anwendungen einer solchen Chipkarte zuzugreifen, beispielsweise auf eine Webserverapplikation. Eine solche Datenkommunikation verläuft ausschließlich unter Verwendung von Kommunikationsprotokollen der TCP/IP-Protokollfamilie, also insbesondere ohne die Verwendung von APDUs. Solche Chipkarten können beispielsweise als Sicherheitselemente in e-Banking-Transaktionen zum Schutz vor Phishing-Angriffen eingesetzt werden. Allerdings sollen auch weiterhin herkömmliche Chipkartenapplikationen einer solchen Chipkarte unterstützt werden, die auf einer Datenkommunikation mittels APDUs beruhen.

In der Regel werden die Daten für eine solche Chipkarte, die sowohl APDUs als auch weitere Daten wie z.B. Kommandos eines Kommunikationsprotokolls aus der Anwendungsschicht gemäß dem TCP/IP-Referenzmodell für spezielle Internetfunktionalitäten verarbeitet, über eine gemeinsame Datenkommunikationsschnittstelle, beispielsweise eine USB-Schnittstelle, übertragen. Um die Kommandos den zugeordneten Verarbeitungsapplikationen auf der Chipkarte weiterleiten zu können, müssen APDUs und die mittel eines TCP/IP-Datenstroms übertragenen Internetprotokoll-Kommandos als solche identifiziert und an die richtige Stelle weitergeleitet werden. Nur auf diese Weise ist sichergestellt, dass APDUs die entsprechenden Chipkartenapplikationen und beispielsweise HTTP-Kommandos eine Webserverapplikation auf der Chipkarte erreichen.

Die WO 2006/032993 A2 beschreibt eine Chipkarte zum Einsetzen in ein Mobilfunkendgerät. Die Chipkarte übernimmt unter anderem die Aufgaben einer SIM-Mobilfunkkarte und umfasst zusätzlich einen TCP/IP-Protokollstapel. Kommandos zur Datenkommunikation mit SIM-Funktionalitäten haben die Form von APDUs. An einer Datenkommunikationsschnittstelle der Chipkarte ankommende APDUs werden durch ein dafür eingerichtetes Modul von anderen Kommandos, z.B. HTTP-Kommandos, getrennt. Die Funktionalität, die das Trennen von APDUs von dem restlichen Datenverkehr in dem Modul durchführt, ist der Netzzugangsschicht des TCP/IP-Referenzmodells zugeordnet, also der untersten Schicht.

Der Artikel "Webcard: A JAVA card web server" beschreibt eine Chipkarte mit ISO 7816-Schnittstelle, über welche sowohl APDU-Kommandos (gemäß ISO 7816-4) als auch in APDUs eingebettete Internetprotokoll-Kommandos zur Karte übertragen werden.

Bei Chipkarten, die eine USB-Schnittstelle besitzen, werden APDUs über eine spezielle USB-Geräte-Klasse (USB-ICCD) behandelt. Die USB-Geräte-Klasse definiert, wie die Systeme über die USB-Schnittstelle miteinander kommunizieren. Auch in diesem Fall werden APDUs vom restlichen einkommenden Datenverkehr in der Netzzugangsschicht mittels einer speziellen Funktionalität dieser Geräte-Klasse getrennt.

Eine Trennung der APDUs vom restlichen einkommenden Datenverkehr in der Netzzugangsschicht oder allgemein mittels spezifischer dafür angepasster Kommunikationsprotokolle erfordern in der Regel einen Eingriff in das entsprechende beteiligte Kommunikationsprotokoll, mithin also einen Eingriff in das Betriebssystem des Systems. Bestehende Systeme können demnach bezüglich dieser Trennungsfunktionalität nicht oder nur sehr schwer umgestellt oder angepasst werden.

Demnach ist es die Aufgabe der vorliegenden Erfindung, für einen Datenträger bestimmte Daten eines Datenstroms auf einfache Weise in APDUs und Internetprotokoll-Kommandos zu trennen.

Diese Aufgabe wird durch ein Verfahren und einen Datenträger mit den Merkmalen der unabhängigen Ansprüche gelöst. Vorteilhafte Ausgestaltungen und Weiterbildungen sind in den abhängigen Ansprüchen angegeben.

Die vorliegende Erfindung basiert auf dem Grundgedanken, die APDUs gemeinsam mit den Internetprotokoll-Kommandos in einem TCP/ IP-Datenstrom zu übertragen und oberhalb der Transportschicht des TCP/IP-Referenzmodells durch eine Zuteiler-Applikation die APDUs und die Internetprotokoll-Kommandos voneinander zu trennen. Die Zuteiler-Applikation ist oberhalb der Transportschicht angeordnet und nimmt nur Standarddienste der Transportschicht oder der Anwendungsschicht in Anspruch. In einer Ausführungsvariante kann eine Zuteiler-Einheit als integraler Bestandteil des Chipkarten-Betriebssystems realisiert sein. In dieser Ausführungsform kann die Funktionalität des Zuteilers im Zusammenspiel mit dem Protokollstapel oder einem Server im Betriebssystem kombiniert sein und ist somit nicht notwendigerweise eine eigenständige Applikation. Sofern im Folgenden von einer Zuteiler-Applikation gesprochen wird, kann also allgemeiner auch eine Zuteiler-Einheit gemeint sein.

Demnach umfasst ein erfindungsgemäßes Verfahren zur Datenkommunikation zwischen einem portablen Datenträger und einem externen Kommunikationsgerät, die beide jeweils einen TCP/IP-Protokollstapel umfassen, zunächst den Schritt des Sendens von Kommunikationsdaten von dem Kommunikationsgerät zu dem Datenträger, wobei die Kommunikationsdaten zumindest Kommandos gemäß einem Internetprotokoll der Anwendungsschicht des TCP/IP-Referenzmodells und Kommandos in Form von APDUs gemäß ISO/IEC 7816-4 umfassen. Des Weiteren umfasst das Verfahren die Schritte des Übertragens der Kommunikationsdaten zwischen dem Kommunikationsgerät und dem Datenträger, des Empfangens der Kommunikationsdaten durch den Datenträger und des Trennens der empfangenen APDUs und der empfangenen Internetprotokoll-Kommandos voneinander mittels der Zuteiler-Applikation des Datenträgers. Dabei werden die genannten Kommandos mittels TCP/IP, also in einem TCP/ IP-Datenstrom, übertragen die Zuteiler-Applikation trennt die APDUs und die Internetprotokoll-Kommandos erst oberhalb der Transportschicht des TCP/IP-Referenzmodells voneinander.

Ein erfindungsgemäßer Datenträger umfasst dementsprechend einen TCP/IP-Protokollstapel, eine Datenkommunikationsschnittstelle zur Datenkommunikation mit einem externen Kommunikationsgerät und eine Zuteiler-Einrichtung. Die Zuteiler-Einrichtung trennt Kommandos gemäß einem Internetprotokoll und Kommandos in Form von APDUs, die in über die Datenkommunikationsschnittstelle empfangenen, mittels TCP/IP übertragenen Kommunikationsdaten enthalten sind, mittels einer Zuteiler-Applikation mit den vorstehend beschrieben Merkmalen.

Eine Trennung von APDUs und Internetprotokoll-Kommandos in der beschriebenen Weise erfordert keine Anpassung konventioneller Kommunikationsprotokolle des TCP/ IP-Protokollstapels des Datenträgers und insbesondere keine Anpassung von Betriebssystemroutinen. Die Zuteiler-Applikation kann jederzeit dynamisch auf jedem Datenträger mit einem gewöhnlichen TCP/IP-Protokollstapel eingerichtet und angepasst werden. Die Zuteiler-Applikation selbst benutzt zum Trennen der Kommandos allenfalls standardisierte Dienste der Anwendungsschicht oder der Transportschicht. Sie ist also in jedem Fall oberhalb der Transportschicht angeordnet, da dies die tiefste Schicht ist, aus der die Zuteiler-Applikation gegebenenfalls Dienste in Anspruch nimmt. Das Verfahren ermöglicht es somit, Internetprotokoll-Kommandos und APDUs über einen gemeinsamen TCP/IP-Datenstrom zu dem Datenträger zu übertragen und die APDUs von den Internetprotokoll-Kommandos in dem Datenträger auf einfache Weise zu trennen.

Im Zusammenhang mit der vorliegenden Erfindung bezeichnet ein TCP/ IP-Datenstrom allgemein Daten, die mittels des Kommunikationsprotokolls IP aus der Internetschicht und des Kommunikationsprotokolls TCP aus der darüber liegenden Transportschicht zwischen zwei Kommunikationspartnern übertragen werden, und zwar nach der hier verwendeten Terminologie auch dann, wenn die Daten, beispielsweise HTTP-Kommandos, die Anwendungsschicht oberhalb der Transportschicht erreicht haben. Auf der Ebene der Transportschicht wird der TCP/ IP-Datenstrom konkret als TCP-Datenstrom bezeichnet.

Gemäß einer ersten Ausführungsform werden die APDUs von dem Kommunikationsgerät mittels des TCP-Protokolls im TCP-Datenstrom übertragen, ohne diese in weitere Steuer- oder Hilfsdaten aus einer höheren Protokollschicht einzubetten. In diesem Fall ist die Zuteiler-Applikation als eine so genannte Socket-Applikation ausgebildet, über welches die APDUs empfangen werden. Ein Socket ist ein Dienst des TCP-Protokolls zum Aufbauen einer verbindungsorientierten Datenkommunikation zwischen zwei Rechnern. Die Zuteiler-Applikation kann über das Betriebssystem ein Socket anfordern und kann daraufhin über dieses Socket Daten empfangen und senden. Ein solches Socket wird gewöhnlich über eine IP-Adresse und eine Nummer, den so genannten Port, adressiert. Der Port zum Empfangen von APDUs ist dabei als eine feste, für diese Anwendung reservierte Portnummer festzulegen, wie dies von den so genannten "Well-Known-Ports" für Standard-Applikationen bekannt ist. Z.B. ist für HTTP der Port mit der Nummer 80 reserviert. Die Zuteiler-Applikation wird nun so eingerichtet, an diesem festgelegten Port einkommende APDUs zu empfangen. Das Kommunikationsgerät seinerseits kennt die IP-Adresse des Datenträgers und die festgelegte Portnummer, auf der die Zuteiler-Applikation APDUs erwartet, und kann sich zum Senden von APDUs mit dem Socket verbinden und APDUs an das Socket senden. APDUs können von der Zuteiler-Applikation somit auf einfache Weise vom restlichen Datenstrom getrennt werden, indem die APDUs an das Socket mit der festgelegten Portnummer adressiert werden.

Gemäß einer zweiten Ausführungsform bettet das Kommunikationsgerät die APDUs in HTTP-Kommandos ein. Eine eingebettete APDU kann im Header des entsprechenden HTTP-Kommandos beispielsweise durch einen entsprechenden "Content-Type"-Eintrag kenntlich gemacht werden. Ein solcher "Content-Type"-Eintrag kennzeichnet allgemein den Datentyp der Daten, die mittels eines HTTP-Kommandos übertragen werden. Die Zuteiler-Applikation, die in dieser Ausführungsform als Webserverapplikation oder als Servlet ausgebildet sein kann, analysiert empfangene HTTP-Kommandos, beispielsweise durch Überprüfen des "Content-Type"-Eintrags im Header des Kommandos, und extrahiert eine darin enthaltene APDU. Auch in dieser Ausführungsform kann die Zuteiler-Applikation APDUs einfach vom restlichen TCP/IP-Datenstrom trennen.

Eine dritte Ausführungsform verallgemeinert die Vorgehensweise der zweiten Ausführungsform. Das Kommunikationsgerät verwendet dabei ein Kommunikationsprotokoll zum Übertragen der APDUs, welches in der Anwendungsschicht noch oberhalb des HTTP-Protokolls angeordnet ist, beispielsweise SOAP, welches im Allgemeinen Dienste von HTTP und TCP verwendet. SOAP ist ein Kommunikationsprotokoll, mit dessen Hilfe Daten zwischen Systemen ausgetauscht und "Remote Procedure Calls", also Aufrufe von Applikationen eines Systems von einem anderen System aus, durchgeführt werden können. APDUs werden in geeigneter Weise in SOAP-Kommandos eingebettet und von der Zuteiler-Applikation, die eingerichtet ist, entsprechende SOAP-Kommandos zu analysieren, erkannt und extrahiert.

Es ist auch eine Zuteiler-Applikation möglich, die alle drei geschilderten Ausführungsformen unterstützt. Auf diese Weise können Kommunikationsdaten, die von unterschiedlich konfigurierten Kommunikationsgeräten empfangen werden, fehlerfrei verarbeitet werden.

Hat die Zuteiler-Applikation die APDUs von dem restlichen Datenstrom getrennt, so leitet sie diese wie auch empfangene Internetprotokoll-Kommandos an zugeordnete Verarbeitungsapplikationen weiter. Das heißt, eine AP-DU wird an eine herkömmliche Chipkarten-Applikation weitergeleitet, ein HTTP-Kommando an eine Webserverapplikation. Die zugeordneten Verarbeitungsapplikationen verarbeiten die weitergeleiteten Kommandos und senden ihrerseits Antwort-Kommandos auf die weitergeleiteten Kommandos. Diese Antwort-Kommandos werden von der Zuteiler-Applikation empfangen und an das Kommunikationsgerät zurück gesendet. Vorzugsweise sendet die Zuteiler-Applikation die Antwort-Kommandos in der Form an das Kommunikationsgerät zurück, in welcher sie die Kommandos zuvor von dem Kommunikationsgerät empfangen hat.

Vorzugsweise kann die Zuteiler-Applikation mehrere empfangene Kommandos, APDUs oder Internetprotokoll-Kommandos, parallel verarbeiten. Das heißt, die Zuteiler-Applikation kann ein Kommando an die zugeordnete Verarbeitungsapplikation auch dann weiterleiten, wenn die Zuteiler-Applikation noch keine Antwort dieser oder einer anderen Verarbeitungsapplikation auf ein zuvor an diese oder eine andere Verarbeitungsapplikation weitergeleitetes Kommando empfangen hat. So wird verhindert, dass eine Verarbeitungsapplikation durch verzögertes Antworten auf ein Kommando andere Verarbeitungsapplikationen in dem Datenträger von der Bearbeitung ihrer Kommandos abhält.

Es ist möglich, die Zuteiler-Applikation als Endpunkt für ein Verschlüsselungsprotokoll vorzusehen. Das heißt, Zertifikate, Authentisierungsschlüssel, Sitzungsschlüssel und dergleichen werden von der Zuteiler-Applikation verwaltet und entsprechende Verschlüsselungsverfahren unterstützt. Von dem Kommunikationsgerät empfangene Kommandos werden dabei von der Zuteiler-Applikation vor dem Weiterleiten an die Verarbeitungsapplikation entschlüsselt. Genauso werden von der Verarbeitungsapplikation erhaltene Antwort-Kommandos vor dem Senden an das Kommunikationsgerät entsprechend verschlüsselt.

Eine Zuteiler-Applikation kann ein JAVA-Karten-Applet - insbesondere für JAVA Card 3.0 - sein. Durch ein Nachladen des Applets in eine herkömmliche JAVA-Karte können die genannten Vorteile auch nachträglich bereitgestellt werden.

Bevorzugt ist der Datenträger eine internetfähige Chipkarte mit einer Webserverapplikation. Mittels des vorstehend beschriebenen Verfahrens können dann auch herkömmliche Chipkartenapplikation der Chipkarte von einem Rechner im Internet über TCP/ IP-adressiert und angesprochen werden.

Die Erfindung wird im Folgenden mit Bezug auf die beiliegenden Zeichnungen beispielhaft beschrieben. Darin zeigen:
- Figur 1: eine bevorzugte Ausführungsform eines erfindungsgemäßen Datenträgers;
- Figur 2: den Fluss übertragener Daten gemäß einer Ausführungsform des erfindungsgemäßen Verfahrens;
- Figur 3A: eine Anordnung einer Zuteiler-Applikation gemäß einer ersten bevorzugten Ausführungsform des Verfahrens in Relation zu einem TCP/ IP-Protokollstapel;
- Figur 3B: die Anordnung der Zuteiler-Applikation gemäß einer zweiten bevorzugten Ausführungsform;
- Figur 3C: die Anordnung der Zuteiler-Applikation gemäß einer dritten bevorzugten Ausführungsform; und
- Figur 4: die Schichten gemäß dem OSI-Referenzmodell in Gegenüberstellung mit den Schichten des TCP/IP-Referenzmodells.

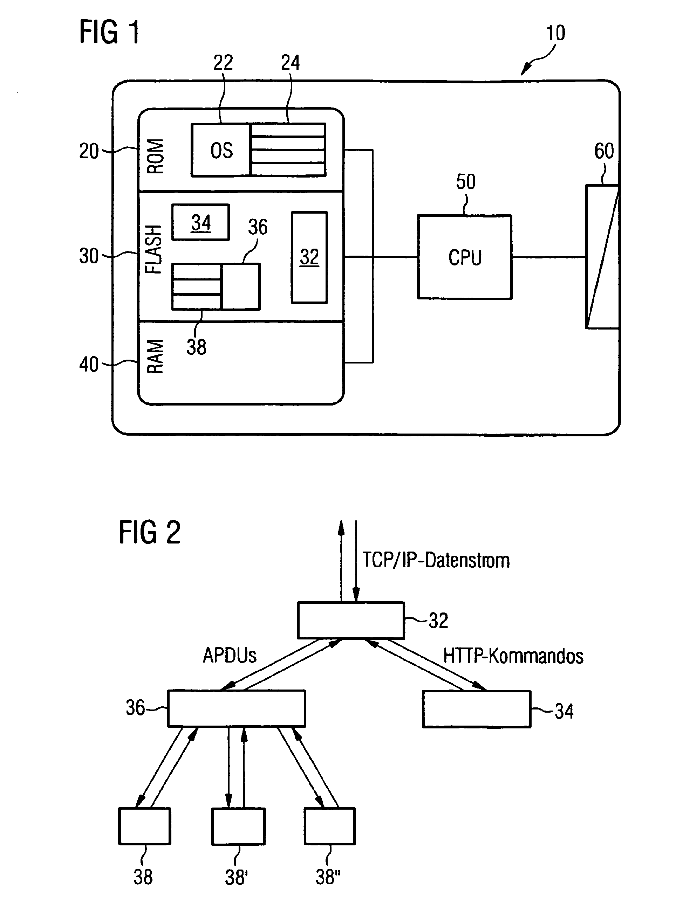

Mit Bezug auf Figur 1 umfasst ein als Chipkarte ausgebildeter portabler Datenträger 10 eine Datenkommunikationsschnittstelle 60 in Form einer USB-Schnittstelle, einen Prozessor (CPU) 50, einen ROM-Speicher 20, einen FLASH-Speicher 30 und einen Arbeitsspeicher (RAM) 40.

Über die USB-Schnittstelle 60 kommuniziert die Chipkarte 10 mit externen Datenverarbeitungsgeräten, beispielsweise einem Personal Computer (PC). Anstelle oder zusätzlich zu der kontaktbehafteten USB-Schnittstelle 60 kann die Chipkarte 10 auch eine kontaktlose Datenkommunikationsschnittstelle besitzen, z.B. eine Antennenspule. Als Übertragungsprotokoll der Netzzugangsschicht kann anstelle von USB auch ein anderes Protokoll verwendet werden.

Der Prozessor 50 steuert die Chipkarte 10 mittels des in dem nicht wiederbeschreibbaren ROM-Speicher 20 gespeicherten Betriebssystems 22, welches einen TCP/ IP-Protokollstapel 24 umfasst. Der TCP/IP-Protokollstapel 24 und Teile des Betriebssystems 22 oder auch das gesamte Betriebssystem 22 können alternativ in dem wiederbeschreibbaren FLASH-Speicher 30 gespeichert sein.

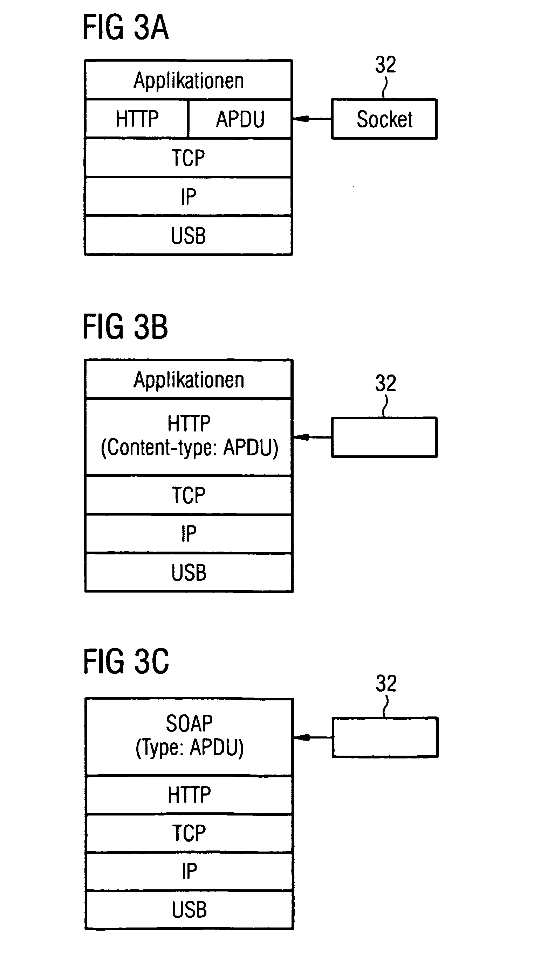

In dem FLASH-Speicher 30 sind eine Zuteiler-Applikation 32, eine Webserverapplikation 34 und verschiedene herkömmliche Chipkartenapplikationen 38 gespeichert, welche ihre Kommandos über eine Verteiler-Applikation 36 erhalten. Der Speicher 30 kann auch als EEPROM-Speicher oder dergleichen ausgebildet sein. Die vorstehend genannten Applikationen 32, 34, 36, 38 werden mit Bezug auf die Figuren 2 und 3 genauer beschrieben. Weitere Applikationen und Daten (nicht gezeigt) können in dem Speicher 30 gespeichert werden, beispielsweise Zertifikate oder Authentisierungsschlüssel sowie Verschlüsselungsapplikationen.

Die Chipkarte 10 kann mittels des TCP/IP-Protokollstapels 24 Kommandos von Datenverarbeitungseinrichtungen über das Internet in Form eines TCP/IP-Datenstroms empfangen, wie es in Figur 2 dargestellt ist. Die mit dem TCP/IP-Datenstrom über die USB-Schnittstelle 60 übertragenen Daten können APDUs gemäß ISO/IEC 7816-4 enthalten, die von den Chipkartenapplikationen 38 verarbeitet und beantwortet werden. In dem TCP/IP-Datenstrom enthaltene Kommandos gemäß einem Internetprotokoll der Anwendungsschicht des TCP/ IP-Referenzmodells werden von der Webserverapplikation 34 verarbeitet und beantwortet. Die Zuteiler-Applikation 32 trennt die APDUs von den restlichen Kommandos. Verschiedene Ausführungsformen der Zuteiler-Applikation 32 werden mit Bezug auf die Figuren 3A-3C nachstehend genauer beschrieben.

Hat die Zuteiler-Applikation 32 eine APDU in dem TCP/IP-Datenstrom erkannt und extrahiert, so leitet sie diese weiter an einen Pufferspeicher (nicht gezeigt) der Verteiler-Applikation 36. Die Verteiler-Applikation 36 entnimmt dann die APDU dem Pufferspeicher und leitet sie der durch die APDU adressierten Chipkartenapplikation 38 zu. Die Zuteiler-Applikation 32 kann mehrere empfangene APDUs in dem Pufferspeicher ablegen, die dann von der Verteiler-Applikation 36 nacheinander entnommen und an die Chipkartenapplikationen 38, 38', 38" weitergeleitet werden. Hat die Chipkartenapplikation 38 die APDU verarbeitet, sendet sie eine Antwort-APDU an die Verteiler-Applikation 36, die ihrerseits die Antwort-APDU an die Zuteiler-Applikation 32 weiterleitet. Auch die Zuteiler-Applikation 32 kann über einen Pufferspeicher verfügen, in dem empfangene Antwort-APDUs zwischenzeitlich gespeichert werden, bevor sie durch die Zuteiler-Applikation 32 über einen TCP/ IP-Datenstrom und über die USB-Schnittstelle 60 an den entsprechenden Empfänger gesendet werden. Vorteilhaft kann die Zuteiler-Applikation 32 die Aufgaben der Verteiler-Applikation 36 mit übernehmen.

Die Zuteiler-Applikation 32 ist dazu beispielsweise multithreading-fähig ausgebildet und dadurch eingerichtet, parallel mehrere APDUs und entsprechende Antwort-APDUs zu verwalten. Beispielsweise kann sie eine APDU an die Chipkartenapplikation 38' weiterleiten, obwohl sie noch keine Antwort-APDU auf eine zuvor an die Chipkartenapplikation 38 weitergeleitete APDU empfangen hat.

Internetprotokoll-Kommandos aus dem TCP/IP-Datenstrom, beispielsweise HTTP-, FTP- oder SSH-Kommandos, werden von der Zuteiler-Applikation 32 an die Webserverapplikation 34 weitergeleitet. Dies geschieht parallel zu dem Weiterleiten der APDUs an die Verteilerapplikation 36 bzw. die Chipkartenapplikationen 38, 38', 38". Die Webserverapplikation 34 verarbeitet die Kommandos und sendet entsprechende Antwort-Kommandos, die von der Zuteiler-Applikation 32 empfangen und über einen TCP/IP-Datenstrom an den adressierten Empfänger weitergeleitet werden.

Die Zuteiler-Applikation 32 ist gleichzeitig ein Endpunkt für Verschlüsselungsprotokolle, z.B. SSL/TLS ("Secure Socket Layer", "Transport Layer Security") oder SCM. SSL/TLS ist ein nach dem TCP/IP-Referenzmodell oberhalb von TCP und unterhalb von HTTP angeordnetes Verschlüsselungsprotokoll und dient zum Verschlüsseln von über das Internet übertragenen Daten. SCM steht für "Secure Messaging" und dient dem Verschlüsseln von APDUs. Die Zuteiler-Applikation 32 ist eingerichtet, auf gesichert gespeicherte Schlüssel oder Zertifikate zuzugreifen und Verschlüsselungs- und Entschlüsselungsroutinen auszuführen. Sämtliche von der Zuteiler-Applikation 32 verschlüsselt empfangene Kommandos, APDUs und Internetprotokoll-Kommandos, werden von der Zuteiler-Applikation 32 vor dem Weiterleiten an die Verteiler-Applikation 36 oder die Webserverapplikation 34 entschlüsselt. Genauso werden von diesen Applikationen empfangene Antwort-Kommandos vor dem Senden an den jeweiligen Adressaten von der Zuteiler-Applikation 32 verschlüsselt. Es ist auch möglich, nur APDUs oder nur Internet-Kommandos auf der Ebene der Zuteiler-Applikation 32 zu verschlüsseln und zu entschlüsseln und die Verschlüsselung der jeweils anderen Kommandos in der jeweiligen Verarbeitungsapplikation 34,38 selbst durchzuführen oder aber sämtliche Verschlüsselungsanwendungen in den Verarbeitungsapplikationen 34, 38 anzusiedeln.

Mit Bezug auf die Figuren 3A, 3B und 3C werden bevorzugte Ausführungsformen der Zuteiler-Applikation 32 beschrieben, und es wird dargelegt, welche Dienste aus welchen Schichten des TCP/ IP-Protokollstapels dazu jeweils verwendet werden.

Die Zuteiler-Applikation 32 kann wie in Fig. 3A dargestellt mittels einer Socket-Kommunikation als so genannte Socket-Applikation realisiert werden. Die Datenkommunikation über ein Socket wird als Dienst direkt von TCP, also einem Protokoll aus dem TCP/IP-Protokollstapel 24 der Chipkarte 10, bereitgestellt. Das TCP liegt in der Transportschicht des TCP/ IP-Referenzmodells. Die Zuteiler-Applikation 32 erzeugt ein Socket, über welches wie nachfolgend beschrieben das Empfangen der APDUs und das Senden der Antwort-APDUs durchgeführt wird. Das heißt, die Zuteiler-Applikation 32 nutzt damit einen Dienst der Transportschicht, konkret einen Dienst des TCP, nämlich ein Socket zum Aufbauen einer Datenkommunikationsverbindung. Die Zuteiler-Applikation kann daher als oberhalb der Transportschicht liegend angesehen werden. Ein Socket kann von einer Client-Applikation auf einem externen Gerät über eine bestimmte, beim Erzeugen des Sockets dem Socket zugeordnete Adresse adressiert werden. Diese Adresse beinhalten bei einer Datenkommunikation über TCP/IP gewöhnlich die IP-Adresse der Chipkarte 10 und eine Portnummer. Mit dem Befehl "listen" wartet die Zuteiler-Applikation 32 an dem Socket auf Verbindungswünsche einer Client-Applikation. Eine solche Verbindung kann von der Client-Applikation mittels des "connect"-Kommandos bei Kenntnis der IP-Adresse und der Portnummer hergestellt werden. Die Client-Applikation sendet dann mittels des "send"-Kommandos eine APDU über das verbundene Socket, welche von der Zuteiler-Applikation 32 mittels des "recv"-Kommandos empfangen wird. Umgekehrt sendet die Zuteiler-Applikation 32 mittels "send" die Antwort-APDU, welche von der Client-Applikation mittels "recv" empfangen wird.

Wie mit Bezug auf Figur 3B dargestellt kann die Zuteiler-Applikation 32 auch als eigene Webserverapplikation oder als Servlet realisiert sein, welches eine HTTP-Schnittstelle, z.B. JavaCard 3 Servlet API, umfasst. Die Zuteiler-Applikation ist somit oberhalb der Anwendungsschicht angeordnet, da sie lediglich auf Kommandos des HTTP-Protokolls, also eines Protokolls der Anwendungsschicht, zugreift. Eine in dieser Weise ausgebildete Zuteiler-Applikation 32 ist eingerichtet, APDUs, die in HTTP-Kommandos eingebettet sind, zu erkennen und zu extrahieren. Ein HTTP-Kommando, in welches eine APDU eingebettet ist, kann z.B. dadurch kenntlich gemacht sein, dass im Header des Kommandos im Feld "Content-Type" ein entsprechender Eintrag "apdu" oder dergleichen eingetragen ist. Empfängt die Zuteiler-Applikation 32 ein solches HTTP-Kommando, so extrahiert sie die APDU und leitetet diese an die Verteiler-Applikation 36 weiter. Das HTTP-Kommando selbst wird nicht an die Webserverapplikation 34 weitergeleitet, da es nur als Träger der APDU vorgesehen war. Die Zuteiler-Applikation 32 bettet die von der Verteiler-Applikation 36 empfangene Antwort-APDU wieder in ein Träger-HTTP-Kommando ein und sendet dieses HTTP-Kommando an den entsprechenden Adressaten. Als Träger-HTTP-Kommandos dienen z.B. "POST" und "GET", für das Servlet entsprechend "doPost" und "doGet". Empfängt die Zuteiler-Applikation 32 hingegen ein HTTP-Kommando, in welches keine APDU eingebettet ist, so wird dieses direkt an die Webserverapplikation 34 weitergeleitet.

Figur 3C veranschaulicht eine Zuteiler-Applikation 32, die eingerichtet ist, mittels SOAP übertragene APDUs zu erkennen und zu extrahieren. Zum Übertragen der APDU über den TCP/ IP-Datenstrom kann auch anderes Kommunikationsprotokoll oberhalb von HTTP verwendet werden. Zur Kennzeichnung der APDU in dem SOAP-Kommando können beliebige geeignete Mechanismen verwendet werden, beispielsweise Bezeichner ähnlich dem "Content-Type"-Bezeichner aus Fig. 3B. Die Zuteiler-Applikation analysiert das SOAP-Kommando, identifiziert eine eingebettete APDU nach definierten Regeln und leitet diese nach dem Extrahieren an die Verteiler-Applikation 36 weiter. Die Zuteiler-Applikation 32 greift nur auf SOAP-Kommandos, also Kommandos der Anwendungsschicht, zu und ist somit oberhalb der Anwendungsschicht angeordnet. Ähnlich wie in der zweiten Ausführungsform aus Fig. 3B bettet die Zuteiler-Applikation 32 die von der Verteiler-Applikation 36 empfangene Antwort-APDU in ein geeignetes Träger-SOAP-Kommando ein und versendet es entsprechend.

Es kann vorgesehen sein, dass die Zuteiler-Applikation 32 auf der Chipkarte 10 so implementiert ist, dass sie alle drei mit Bezug auf die Figuren 3A-3C beschriebenen Ausführungsformen unterstützt.

## Patentansprüche

1. Verfahren zur Datenkommunikation zwischen einem portablen Datenträger (10) und einem externen Kommunikationsgerät, wobei der portable Datenträger (10) und das externe Kommunikationsgerät jeweils einen TCP/ IP-Protokollstapel (24) umfassen, umfassend die Schritte:
- Senden von Kommunikationsdaten von dem externen Kommunikationsgerät zu dem portablen Datenträger (10), wobei die Kommunikationsdaten zumindest Kommandos gemäß einem Internetprotokoll der Anwendungsschicht des TCP/IP-Referenzmodells und Kommandos in Form von APDUs gemäß ISO/IEC 7816-4 umfassen;
- Übertragen der Kommunikationsdaten zwischen dem externen Kommunikationsgerät und dem portablen Datenträger (10);
- Empfangen der Kommunikationsdaten durch den portablen Datenträger (10); und
- Trennen der empfangenen APDUs und der empfangenen Internetprotokoll-Kommandos voneinander mittels einer Zuteiler-Einheit (32) des portablen Datenträgers (10);
**dadurch gekennzeichnet, dass** die genannten Kommandos mittels TCP/IP übertragen werden und die Zuteiler-Einheit (32) das Trennen der APDUs und der Internetprotokoll-Kommandos oberhalb der Transportschicht des TCP/IP-Referenzmodells durchführt.

2. Verfahren nach Anspruch 1, **dadurch gekennzeichnet, dass** die APDUs von dem Kommunikationsgerät mittels TCP-Protokoll in einem TCP-Datenstrom übertragen werden und dass die Zuteiler-Einheit (32) als Socket-Applikation realisiert ist, welche die empfangenen APDUs aus dem TCP-Datenstrom extrahiert.

3. Verfahren nach Anspruch 1 oder 2, **dadurch gekennzeichnet, dass** das Kommunikationsgerät die APDUs in HTTP-Kommandos einbettet und dass die Zuteiler-Einheit (32) als Webserverapplikation oder als Servlet realisiert ist, die empfangene HTTP-Kommandos analysiert und die in HTTP-Kommandos eingebetteten APDUs extrahiert.

4. Verfahren nach einem der Ansprüche 1 bis 3, **dadurch gekennzeichnet, dass** das Kommunikationsgerät ein bezüglich des TCP/IP-Referenzmodells oberhalb des HTTP-Protokolls angeordnetes Kommunikationsprotokoll zum Übertragen der APDUs verwendet und dass die Zuteiler-Einheit (32) die empfangenen Kommunikationsdaten gemäß dieses Kommunikationsprotokolls analysiert und die darin enthaltenen APDUs extrahiert.

5. Verfahren nach einem der Ansprüche 1 bis 4, **gekennzeichnet durch** die weiteren Schritte nach dem Trennen der Internetprotokoll-Kommandos von den APDUs:
- Weiterleiten der getrennten Internetprotokoll-Kommandos und APDUs an zugeordnete Verarbeitungsapplikationen (38,38', 38") des Datenträgers (10) **durch** die Zuteiler-Einheit (32);
- Empfangen einer Antwort auf die weitergeleiteten Kommandos von den Verarbeitungsapplikation (38,38', 38") **durch** die Zuteiler-Einheit (32); und
- Senden der Antworten an das Kommunikationsgerät **durch** die Zuteiler-Einheit (32).

6. Verfahren gemäß Anspruch 5, **dadurch gekennzeichnet, dass** die Zuteiler-Einheit (32) beim Schritt des Weiterleitens der Kommandos ein Kommando auch dann an eine Verarbeitungsapplikation (38') weiterleitet, wenn die Zuteiler-Einheit (32) noch keine Antwort von dieser oder einer anderen Verarbeitungsapplikation (38) auf ein zuvor an diese oder eine andere Verarbeitungsapplikation (38) weitergeleitetes Kommando empfangen hat.

7. Verfahren nach Anspruch 5 oder 6, **dadurch gekennzeichnet, dass** die Zuteiler-Einheit (32) ein in verschlüsselter Form empfangenes Internetprotokoll-Kommando und/oder eine in verschlüsselter Form empfangene APDU vor dem Weiterleiten an die zugehörige Verarbeitungsapplikation (38, 38', 38") entschlüsselt und die von der Verarbeitungsapplikation (38,38', 38") empfangene Antwort vor dem Senden an das Kommunikationsgerät verschlüsselt.

8. Verfahren nach einem der Ansprüche 1 bis 7, **dadurch gekennzeichnet, dass** die Zuteiler-Einheit (32) eine Zuteiler-Applikation ist, die insbesondere auch nachträglich auf den portablen Datenträger geladen werden kann.

9. Portabler Datenträger (10), umfassend
- einen TCP/ IP-Protokollstapel (24),
- eine Datenkommunikationsschnittstelle (60) zur Datenkommunikation mit einem externen Kommunikationsgerät
- und eine Zuteiler-Einheit (50, 32), die eingerichtet ist, in über die Datenkommunikationsschnittstelle (60) empfangenen Kommunikationsdaten enthaltene Kommandos gemäß einem Internetprotokoll der Anwendungsschicht des TCP/IP-Referenzmodells und Kommandos in Form von APDUs gemäß ISO/IEC 7816-4 voneinander zu trennen,
**dadurch gekennzeichnet, dass** die genannten Kommandos mittels TCP/IP übertragen werden und die Zuteiler-Einheit (32) eingerichtet ist, das Trennen der APDUs von den Internetprotokoll-Kommandos aus dem TCP/ IP-Datenstrom oberhalb der Transportschicht des TCP/ IP-Referenzmodells durchzuführen.

10. Portabler Datenträger (10) nach Anspruch 9, **dadurch gekennzeichnet, dass** die Zuteiler-Einheit (32) als Socket-Applikation realisiert und eingerichtet ist, APDUs, die mittels TCP-Protokoll in einem TCP-Datenstrom übertragen werden, aus dem TCP-Datenstrom zu extrahieren.

11. Portabler Datenträger (10) nach Anspruch 9 oder 10, **dadurch gekennzeichnet, dass** die Zuteiler-Einheit (32) als Webserverapplikation oder als Servlet realisiert und eingerichtet ist, in HTTP-Kommandos eingebettete APDUs zu extrahieren.

12. Portabler Datenträger (10) nach einem der Ansprüche 9 bis 11, **dadurch gekennzeichnet, dass** die Zuteiler-Einheit (32) eingerichtet ist, mittels eines bezüglich des TCP/IP-Referenzmodells oberhalb des HTTP-Protokolls angeordneten Kommunikationsprotokolls übertragene Kommunikationsdaten zu analysieren und darin enthaltene APDUs zu extrahieren.

13. Portabler Datenträger (10) gemäß einem der Ansprüche 9 bis 12, **dadurch gekennzeichnet, dass** die Zuteiler-Einheit (32) weiterhin eingerichtet ist, die Internetprotokoll-Kommandos und APDUs an zugeordnete Verarbeitungsapplikationen (38,38', 38") des Datenträgers (10) weiterzuleiten, Antworten auf die weitergeleiteten Kommandos von den Verarbeitungsapplikation (38, 38', 38") zu empfangen und die Antworten an ein Kommunikationsgerät zu senden.

14. Portabler Datenträger (10) nach Anspruch 13, **dadurch gekennzeichnet, dass** die Zuteiler-Einheit (32) eingerichtet ist, auch dann ein Kommando an eine Verarbeitungsapplikation (38') weiterzuleiten, wenn die Zuteiler-Einheit (32) noch keine Antwort dieser oder einer anderen Verarbeitungsapplikation (38) auf ein zuvor an diese oder eine andere Verarbeitungsapplikation (38) weitergeleitetes Kommando empfangen hat.

15. Portabler Datenträger (10) nach Ansprüche 13 oder 14, **dadurch gekennzeichnet, dass** die Zuteiler-Einheit (32) eingerichtet ist, ein in verschlüsselter Form empfangenes Intemetprotokoll-Kommando und/ oder eine in verschlüsselter Form empfangene APDU vor dem Weiterleiten an die zugeordnete Verarbeitungsapplikation (38, 38', 38") zu entschlüsseln und eine von der Verarbeitungsapplikation (38, 38', 38") empfangene Antwort vor dem Senden an ein Kommunikationsgerät zu verschlüsseln.

16. Portabler Datenträger (10) nach einem der Ansprüche 9 bis 15, **dadurch gekennzeichnet, dass** der Datenträger eine internetfähige Chipkarte (10) mit Webserverapplikation (34) ist.

17. Portabler Datenträger (10) nach einem der Ansprüche 9 bis 16, **dadurch gekennzeichnet, dass** die Zuteiler-Einheit (32) eine Zuteiler-Applikation ist, die insbesondere auch nachträglich auf den portablen Datenträger geladen werden kann.

## Claims

1. A method for the data communication between a portable data carrier (10) and an external communication device, wherein the portable data carrier (10) and the external communication device in each case comprise a TCP/IP protocol stack (24), comprising the steps:
- sending communication data from the external communication device to the portable data carrier (10), the communication data comprising at least commands according to an Internet protocol of the application layer of the TCP/IP reference model and commands in the form of APDUs according to ISO/IEC 7816-4;
- transmitting the communication data between the external communication device and the portable data carrier (10);
- receiving the communication data by the portable data carrier (10); and
- separating the received APDUs and the received Internet protocol commands from each other by means of an allocator unit (32) of the portable data carrier (10);
**characterized in that** the mentioned commands are transmitted by means of TCP/IP and the allocator unit (32) carries out the separation of the APDUs and the Internet protocol commands above the transport layer of the TCP/IP reference model.

2. The method according to claim 1, **characterized in that** the APDUs are transmitted by the communication device by means of TCP protocol in a TCP data stream and that the allocator unit (32) is realized as a socket application which extracts the received APDUs from the TCP data stream.

3. The method according to claim 1 or 2, **characterized in that** the communication device embeds the APDUs in HTTP commands and that the allocator unit (32) is realized as a web server application or as a servlet which analyzes received HTTP commands and extracts the APDUs embedded in HTTP commands.

4. The method according to any of claims 1 to 3, **characterized in that** for transmitting the APDUs the communication device uses a communication protocol which with respect to the TCP/IP reference model is arranged above the HTTP protocol and that the allocator unit (32) analyzes the received communication data according to this communication protocol and extracts the APDUs contained therein.

5. The method according to any of claims 1 to 4, **characterized by** the further steps after the separation of the Internet protocol commands from the APDUs:
- forwarding the separated Internet protocol commands and APDUs to assigned processing applications (38, 38', 38") of the data carrier (10) by the allocator unit (32);
- receiving a response to the forwarded commands from the processing application (38, 38', 38") by the allocator unit (32); and
- sending the responses to the communication device by the allocator unit (32).

6. The method according to claim 5, **characterized in that** the allocator unit (32) upon the step of forwarding the commands forwards a command to a processing application (38') even when the allocator unit (32) has not yet received a response from this or another processing application (38) to a command forwarded to this or another processing application (38) before.

7. The method according to claim 5 or 6, **characterized in that** the allocator unit (32) decrypts an Internet protocol command received in encrypted form and/or an APDU received in encrypted form before the forwarding to the associated processing application (38, 38', 38") and encrypts the response received from the processing application (38, 38', 38") before the sending to the communication device.

8. The method according to any of claims 1 to 7, **characterized in that** the allocator unit (32) is an allocator application which in particular can also be loaded onto the portable data carrier later.

9. A portable data carrier (10), comprising
- a TCP/IP protocol stack (24),
- a data communication interface (60) for the data communication with an external communication device,
- and an allocator unit (50, 32) which is set up to separate from each other commands according to an Internet protocol of the application layer of the TCP/IP reference model and commands in the form of APDUs according to ISO/IEC 7816-4 both contained in communication data received via the data communication interface (60),
**characterized in that** the mentioned commands are transmitted by means of TCP/IP and **in that** the allocator unit (32) is set up to carry out the separation of the APDUs from the Internet protocol commands from the TCP/IP data stream above the transport layer of the TCP/IP reference model.

10. The portable data carrier (10) according to claim 9, **characterized in that** the allocator unit (32) is realized as a socket application and set up to extract from the TCP data stream APDUs which are transmitted by means of TCP-protocol in a TCP data stream.

11. The portable data carrier (10) according to claim 9 or 10, **characterized in that** the allocator unit (32) is realized as a web server application or as a servlet and set up to extract APDUs embedded in HTTP commands.

12. The portable data carrier (10) according to any of claims 9 to 11, **characterized in that** the allocator unit (32) is set up to analyze communication data transmitted by means of a communication protocol which with respect to the TCP/IP reference model is arranged above the HTTP protocol and to extract APDUs contained therein.

13. The portable data carrier (10) according to any of claims 9 to 12, **characterized in that** the allocator unit (32) is further set up to forward the Internet protocol commands and APDUs to assigned processing applications (3 8, 38', 38") of the data carrier (10), to receive responses to the forwarded commands from the processing application (38, 38', 38"), and to send the responses to a communication device.

14. The portable data carrier (10) according to claim 13, **characterized in that** the allocator unit (32) is set up to forward a command to a processing application (38') even when the allocator unit (32) has not yet received a response from this or another processing application (38) to a command forwarded to this or another processing application (38) before.

15. The portable data carrier (10) according to claims 13 or 14, **characterized in that** the allocator unit (32) is set up to decrypt an Internet protocol command received in encrypted form and/or an APDU received in encrypted form before the forwarding to the assigned processing application (38, 38', 38") and to encrypt a response received from the processing application (38, 38', 38") before the sending to a communication device.

16. The portable data carrier (10) according to any of claims 9 to 15, **characterized in that** the data carrier is an Internet-capable chip card (10) having web server application (34).

17. The portable data carrier (10) according to any of claims 9 to 16, **characterized in that** the allocator unit (32) is an allocator application which in particular can also be loaded onto the portable data carrier later.

## Revendications

1. Procédé de communication de données entre un support de données (10) portable et un appareil de communication externe, le support de données (10) portable et l'appareil de communication externe comprenant respectivement une pile de protocole TCP/IP (24), comprenant les étapes:
• envoi de données de communication de l'appareil de communication externe au support de données (10) portable, les données de communication comprenant au moins des commandes conformes à un protocole Internet de la couche application du modèle de référence TCP/IP ainsi que des commandes sous forme de UDAPs conformément à ISO/IEC 7816-4;
• transmission des données de communication entre l'appareil de communication externe et le support de données (10) portable;
• réception des données de communication par le support de données (10) portable; et
• séparation, les unes des autres, des UDAPs reçues et des commandes protocole Internet reçues, au moyen d'une unité d'arbitrage (32) du support de données (10) portable;
**caractérisé en ce que** lesdites commandes sont transmises au moyen de TCP/IP et **en ce que** l'unité d'arbitrage (32) exécute la séparation des UDAPs et des commandes protocole Internet au-dessus de la couche de transport du modèle de référence TCP/IP.

2. Procédé selon la revendication 1, **caractérisé en ce que** les UDAPs sont transmises par l'appareil de communication au moyen d'un protocole TCP dans un flux de données TCP et **en ce que** l'unité d'arbitrage (32) est réalisée sous forme d'application socket qui extrait du flux de données TCP les UDAPs reçues.

3. Procédé selon la revendication 1 ou 2, **caractérisé en ce que** l'appareil de communication incorpore les UDAPs dans des commandes HTTP et **en ce que** l'unité d'arbitrage (32) est réalisée sous forme d'application de serveur Web ou en tant que servlet qui analyse des commandes HTTP reçues et extrait les UDAPs incorporées dans des commandes HTTP.

4. Procédé selon une des revendications de 1 à 3, **caractérisé en ce que** l'appareil de communication utilise pour la transmission des UDAPs un protocole de communication disposé au-dessus du protocole HTTP par rapport au modèle de référence TCP/IP et **en ce que** l'unité d'arbitrage (32) analyse conformément à ce protocole de communication les données de communication reçues et extrait les UDAPs y étant contenues.

5. Procédé selon une des revendications de 1 à 4, **caractérisé par** les étapes supplémentaires après la séparation des commandes protocole Internet et des UDAPs:
• transfert des commandes protocole Internet et des UDAPs séparées à des applications de traitement correspondantes (38, 38', 38") du support de données (10) par l'unité d'arbitrage (32);
• réception, par l'intermédiaire de l'unité d'arbitrage (32), d'une réponse de l'application de traitement (38, 38', 38") aux commandes transférées ; et
• envoi des réponses à l'appareil de communication par l'intermédiaire de l'unité d'arbitrage (32).

6. Procédé selon la revendication 5, **caractérisé en ce que** l'unité d'arbitrage (32), lors de l'étape du transfert des commandes, transfère une commande à une application de traitement (38') même quand l'unité d'arbitrage (32) n'a pas encore reçu de réponse de la part de cette dernière ou d'une autre application de traitement (38) à la suite d'une commande auparavant transférée à cette dernière ou à une autre application de traitement (38).

7. Procédé selon la revendication 5 ou 6, **caractérisé en ce que** l'unité d'arbitrage (32) déchiffre, avant le transfert à l'application de traitement correspondante (38, 38', 38"), une commande protocole Internet reçue sous forme chiffrée et/ou une UDAP reçue sous forme chiffrée, et chiffre avant l'envoi à l'appareil de communication la réponse reçue par l'application de traitement (38, 38', 38").

8. Procédé selon une des revendications de 1 à 7, **caractérisé en ce que** l'unité d'arbitrage (32) est une application d'arbitrage qui peut notamment être chargée aussi ultérieurement sur le support de données (10) portable.

9. Support de données (10) portable, comprenant
• une pile de protocole TCP/IP (24),
• une interface de communication de données (60) destinée à la communication de données avec un appareil de communication externe
• et une unité d'arbitrage (50, 32) qui est configurée pour séparer les unes des autres des commandes conformes à un protocole Internet de la couche application du modèle de référence TCP/I et des commandes sous forme de UDAPs conformément à ISO/IEC 7816-4, contenues dans des données de communication reçues par l'intermédiaire de l'interface de communication de données (60),
**caractérisé en ce que** lesdites commandes sont transmises au moyen de TCP/IP et **en ce que** l'unité d'arbitrage (32) est configurée pour exécuter la séparation des UDAPs et des commandes protocole Internet du flux de données TCP/IP au-dessus de la couche de transport du modèle de référence TCP/IP.

10. Support de données (10) portable selon la revendication 9, **caractérisé en ce que** l'unité d'arbitrage (32) est réalisée sous forme d'application socket et est configurée pour extraire à partir du flux de données TCP/IP des UDAPs qui sont transmises au moyen d'un protocole TCP dans un flux de données TCP.

11. Support de données (10) portable selon la revendication 9 ou 10, **caractérisé en ce que** l'unité d'arbitrage (32) est réalisée sous forme d'application de serveur Web ou en tant que servlet et est configurée pour extraire des UDAPs incorporées dans des commandes HTTP.

12. Support de données (10) portable selon une des revendications 9 à 11, **caractérisé en ce que** l'unité d'arbitrage (32) est configurée pour analyser des données de communication transmises au moyen d'un protocole de communication disposé au-dessus du protocole HTTP par rapport au modèle de référence TCP/IP et pour extraire les UDAPs y étant contenues.

13. Support de données (10) portable selon une des revendications de 9 à 12, **caractérisé en ce que** l'unité d'arbitrage (32) est en outre configurée pour transférer les commandes protocole Internet et les UDAPs à des applications de traitement correspondantes (38, 38', 38") du support de données (10), pour recevoir de la part des applications de traitement (38, 38', 38") des réponses aux commandes transférées et pour envoyer les réponses à un appareil de communication.

14. Support de données (10) portable selon la revendication 13, **caractérisé en ce que** l'unité d'arbitrage (32) est configurée pour transférer une commande à une application de traitement (38') même quand l'unité d'arbitrage (32) n'a pas encore reçu de réponse de la part de cette dernière ou d'une autre application de traitement (38) à la suite d'une commande auparavant transférée à cette dernière ou à une autre application de traitement (38).

15. Support de données (10) portable selon la revendication 13 ou 14, **caractérisé en ce que** l'unité d'arbitrage (32) est configurée pour déchiffrer, avant le transfert à l'application de traitement correspondante (38, 38', 38"), une commande protocole Internet reçue sous forme chiffrée et/ou une UDAP reçue sous forme chiffrée, et pour chiffrer avant l'envoi à un appareil de communication une réponse reçue par l'application de traitement (38, 38', 38").

16. Support de données (10) portable selon une des revendications de 9 à 15, **caractérisé en ce que** le support de données est une carte à puce (10) compatible Internet comprenant des applications de serveur Web (34).

17. Support de données (10) portable selon une des revendications de 9 à 16, **caractérisé en ce que** l'unité d'arbitrage (32) est une application d'arbitrage qui peut notamment être chargée aussi ultérieurement sur le support de données portable.
